# EUROPEAN PATENT APPLICATION

(11) **EP 2 778 933 A1**
(43) Date of publication of application: **17.09.2014**
(21) Application number: 14158963.0
(22) Date of filing: 11.03.2014
(51) Int. Cl.: G06F 12/08

(54) **System, method and computer-readable medium for managing a cache store to achieve improved cache ramp-up across system reboots**

(30) Priority: 11.03.2013 IN KO02722013
(71) Applicant: LSI Corporation, San Jose, CA 95131 (US)
(72) Inventor: Shivashankaraiah, Vinay Bangalore, 560070 Bangalore Karnataka (IN); Parameswaran, Subramanian, 560078 Bangalore Karnataka (IN); Ish, Mark, Sandy Springs, GA 30328 (US)
(74) Representative: Williams, David John

(57) **Abstract**

A cache controller having a cache store and associated with a storage system maintains information stored in the cache store across a reboot of the cache controller. The cache controller communicates with a host computer system and a data storage system. The cache controller partitions the cache memory to include a metadata portion and log portion. A separate portion is used for cached data elements. The cache controller maintains a copy of the metadata in a separate memory accessible to the host computer system. Data is written to the cache store hen the metadata log reaches its capacity. Upon a reboot, metadata is copied back to the host computer system and the metadata log is traversed to copy additional changes in the cache that have not been saved to the data storage system.

## Description

### TECHNICAL FIELD OF THE INVENTION

The invention relates generally to data storage systems and, more specifically, to data storage systems employing a Flash-memory based data cache.

### BACKGROUND OF THE INVENTION

Some conventional computing systems employ a non-volatile memory device as a block or file level storage alternative for slower data storage devices (e.g., a magnetic disk storage medium, an optical disk storage medium or one or more data storage devices accessible via a network), to improve performance of the computing system and/or applications executed by the computing system. In this respect, because input/output (I/O) operations can be performed significantly faster to some non-volatile memory devices (hereinafter a "cache device" for simplicity) than from or to a slower storage device, use of the cache device provides opportunities to significantly improve the rate of I/O operations.

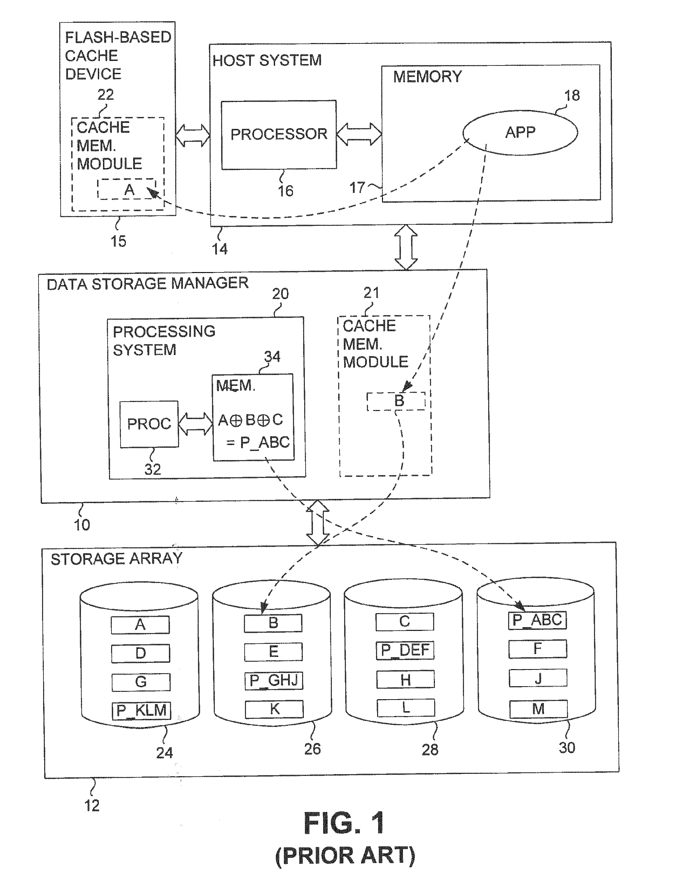

It is known to incorporate data caching to increase I/O performance over the I/O performance of a data storage system supported by a data storage manager and a storage array. For example, in the system illustrated in FIG. 1, a data storage manager 10 controls a storage array 12 in a manner that enables reliable data storage. A host (computer) system 14 stores data in and retrieves data from storage array 12 via data storage manager 10. That is, a processor 16, operating in accordance with an application program or APP 18, issues requests for writing data to and reading data from storage array 12. Although for purposes of clarity host system 14 and data storage manager 10 are depicted in FIG. 1 as separate elements, it is common for a data storage manager 10 to be physically embodied as a card that plugs into a motherboard or backplane of such a host system 14.

Such systems may cache data based on the frequency of access to certain data stored in the data storage devices 24, 26, 28 and 30 of storage array 12. This cached or "hot" data, e.g., element A, is stored in a cache memory module 22 of the flash-based memory device 15. The element A can be identified at a block level or file level. Thereafter, requests issued by applications, such as APP 18, for the "hot" data are serviced by the flash-based memory device 15, rather than the data storage system. Such conventional data caching systems are scalable and limited only by the capacity of the flash-based storage device 15. Accordingly, it can take a significant amount of time to fill the entire capacity of the flash-based storage device 15. While the flash-based cache device 15 can be instructed to cache data items that are frequently read by the host system 14, it is still important to remember what data was cached across a reboot of the flash-based device 15. Absent information about what data is frequently required by the host system 14, the rebuild of the cached data can take a significant amount of time, during which one or both of the performance of the flash-based cache device 15 and performance of the host system 14 may be impacted, resulting in a drop in application performance that may be observed by users of such conventional systems.

A separate and distinct cache memory module 21 in communication with the data storage manager 10 may temporarily cache data element B before and or during processing steps configured to reliably distribute data across the storage elements 24, 26, 28 and 30 of storage array 12.

A redundant array of inexpensive (or independent) disks (RAID) is a common type of data storage system that addresses the reliability by enabling recovery from the failure of one or more storage devices. It is known to incorporate data caching in a RAID system. In the system illustrated in FIG. 1, data storage manager 10 includes a RAID processing system 20 that caches data in units of blocks, which can be referred to as read cache blocks (RCBs) and write cache blocks (WCBs). The WCBs comprise data that host system 14 sends to the data storage manager 10 as part of requests to store the data in storage array 12. In response to such a write request from host system 14, data storage manager 10 caches or temporarily stores a WCB in one or more cache memory modules 21, then returns an acknowledgement message to host system 14. At some later point in time, data storage manager 10 transfers the cached WCB (typically along with other previously cached WCBs) to storage array 12. The RCBs comprise data that data storage manager 10 has frequently read from storage array 12 in response to read requests from host system 14. Caching frequently requested data is more efficient than reading it from storage array 12 each time host system 14 requests it, since cache memory modules 21 are of a type of memory, such as flash memory, that can be accessed much faster than the type of memory (e.g., disk drive) that data storage array 12 comprises.

### SUMMARY

Embodiments of a system and method for managing a cache store for improved cache ramp-up after a reboot operation are illustrated and described in exemplary embodiments. A cache ramp-up is the time it takes a cache controller to restore and validate the contents of the data elements stored in the cache.

In an exemplary embodiment, a cache controller includes at least one interface for communicating with a host computer system and a data storage system. The cache controller further includes a cache store and a processing system. The processing system is responsive to header information stored in the cache store and executable instructions. The processing system is configured to respond in a programmable way to a state identifier responsive to a present state of the cache controller, identify a next usable sequence number for a metadata log, identify a location and size of a metadata store in the cache store, identify a location and size of a metadata log in the cache store, identify a location and size of a plurality of cache windows in the cache store, each cache window including a plurality of cache lines further identified by the cache controller. In response to a specified condition, the processing system is further configured to write information stored in a representation of the metadata and accessible via the host computer system to the cache store and replace a next usable sequence number in the metadata log.

In another exemplary embodiment, a method for managing a cache store associated with a host computer system and a data store that maintains information in the cache store across a reboot of the cache host controller is disclosed. The method includes the steps of partitioning the cache store to provide a first portion for storing metadata, a second portion for storing data values identified by a data storage manager as data that belongs in the cache store, a third portion for storing changes to the metadata, and a fourth portion containing information about the host and the cache store, populating a representation of the first portion with metadata and a representation of the second portion with data values as directed by the data storage manager, the data storage manager identifying data items to be stored in the cache store in accordance with a frequency value representing requests over a desired time for specific data items stored in the data storage system, creating an entry in a representation of the third portion each time the representation of the first portion is populated with metadata and the representation of the second portion is populated with data values, as directed by the data storage manager, wherein the representations of the first portion, second portion and third portion are stored in a volatile memory accessible via one or more of the host computer system, the data storage manager, and the cache host controller, comparing a present index in the representation of the third portion with an initial index to determine when a data storage capacity of the third portion has been reached, when the data storage capacity of the third portion has been reached, writing the information in the representation of the first portion to the corresponding first store of the cache store and replacing the initial index with a next available storage location in the third portion of the cache store.

In the exemplary embodiments, upon completion of a reboot of the cache controller, a processing system executes executable instructions that read the contents of a representation of the cache store, the contents stored in a volatile memory accessible to the host computer system and further containing a next usable sequence number, copy the contents of the metadata store to the volatile memory accessible to the host computer system, apply valid log entries on top of one or more entries in the metadata store to generate recovered metadata, traverse the recovered metadata to identify appropriate cache windows to update with corresponding data from the data storage system, modify a status of the appropriate cache windows, insert the cache windows into hash tables and the priority index and update a flag indicating to a data storage system that I/O operations to the cache memory are enabled.

### BRIEF DESCRIPTION OF THE DRAWINGS

FIG. 1 is a block diagram illustrating a conventional cache device coupled to a host computer and a storage system.
FIG. 2 is a block diagram illustrating an improved cache controller in accordance with an exemplary embodiment of the invention.
FIG. 3 is a schematic illustration of the cache store of FIG. 2.
FIG. 4 is a schematic illustration of the metadata store of FIG. 3.
FIG. 5 is a schematic illustration of the log store of FIG. 3.
FIG. 6 is a schematic illustration of the host memory representation or cache store mirror of FIG. 2.
FIG. 7 is a schematic illustration showing use of the log store of FIG. 3 over time.
FIG. 8 is a schematic illustration of the cache software of FIG. 2.
FIGs. 9A and 9B include a flow diagram illustrating a method for managing a cache store to achieve improved ramp-up across reboots of the cache device.

### DETAILED DESCRIPTION OF AN ILLUSTRATIVE EMBODIMENT

A cache controller having a cache store and associated with a storage system maintains information stored in the cache store across a reboot of the cache controller. The cache controller communicates with a host computer system and a data storage system. The improved cache controller can be employed in flash-based cache devices coupled to a host computer system. The cache controller partitions the cache memory to include a metadata portion and log portion. A separate portion is used for cached data elements. The cache controller maintains a copy of the metadata in a separate memory accessible to the host computer system. Data is written to the cache store when the metadata log reaches its capacity. Upon a reboot, metadata is copied back to the host computer system and the metadata log is traversed to copy additional changes in the cache that have not been saved to the data storage system and/or to the cache store.

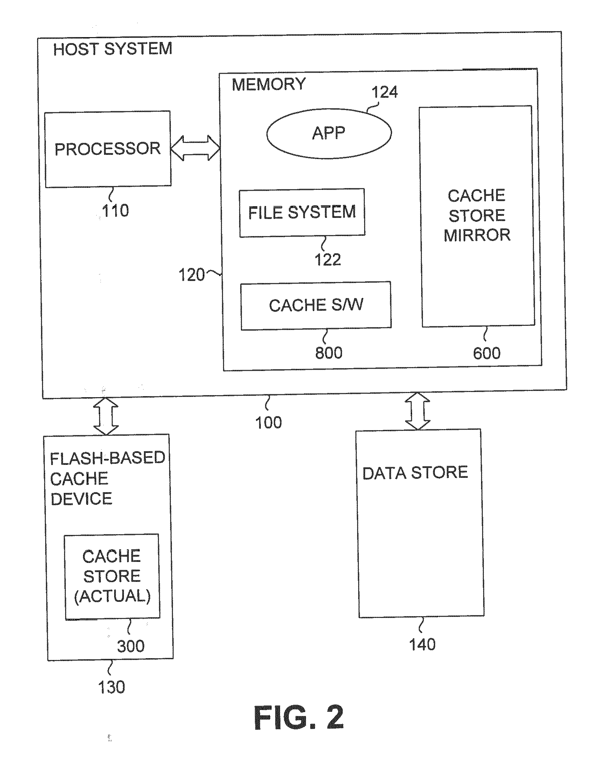

As illustrated in FIG. 2, in an illustrative or exemplary embodiment of the invention, host system 100 is coupled a data store 140 and a flash-based cache device 130. The data store 140 can be a direct attached storage (DAS) or a storage area network (SAN). In these embodiments the data store 140 will include multiple data storage devices, such as those described in association with the storage array 12 (FIG. 1), under the direction of a data storage manager. Although not illustrated and described in detail herein for purposes of clarity, it should be understood that data storage manager operates to provide RAID protection, such as, for example, RAID-5 protection, by distributing data across multiple data storage devices.

A RAID controller (not shown) communicates with data store 140 via an interface, such as a bus, and also communicates with a host (computer) system 100 via another interface, such as another bus. For simplicity, the RAID controller and the interfaces with the same, the host system 100 and the data store 140 are illustrated in FIG. 2 by a two-way arrow between host system 100 and data store 140. RAID controllers can be physically embodied in an assembly that is pluggable into a motherboard or backplane (not shown) of host system 100 or in any other suitable structure.

Host system 100 stores data in and retrieves data from data store 140. That is, a processor 110 in host system 100, operating in accordance with an application program 124 or similar software, issues requests for reading and writing data to and from data store 140. Note that although application program 124 is depicted in a conceptual manner as stored in or residing in a memory 120, persons of skill in the art can appreciate that such software may take the form of multiple modules, segments, programs, files, etc., which are loaded into memory 120 on an as-needed basis in accordance with conventional computing principles. Similarly, although memory 120 is depicted as a single element for purposes of clarity, memory 120 can comprise multiple elements. Likewise, although processor 110 is depicted as a single element for purposes of clarity, processor 110 can comprise multiple elements.

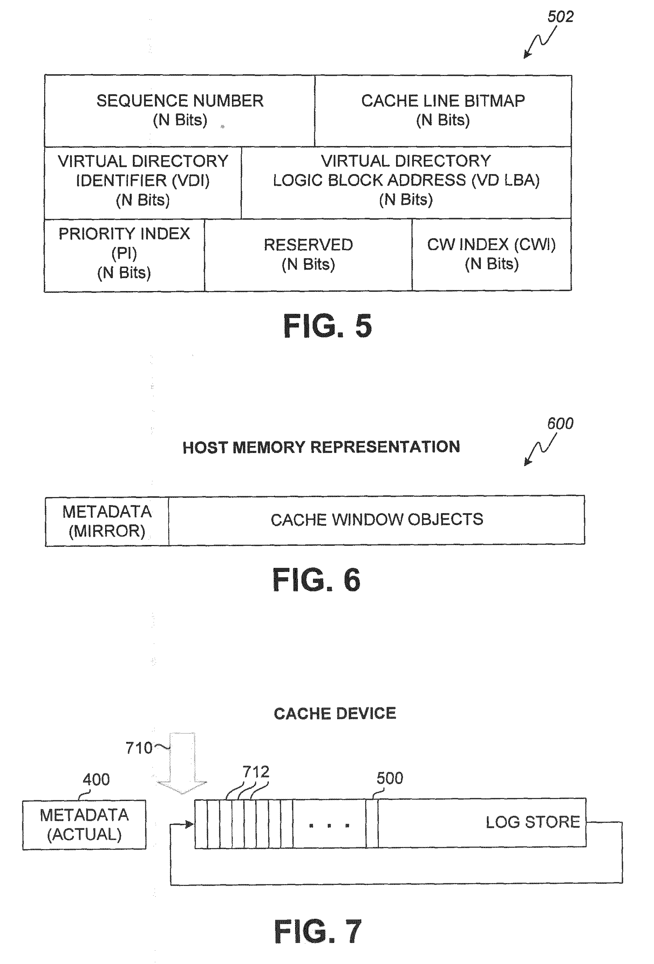

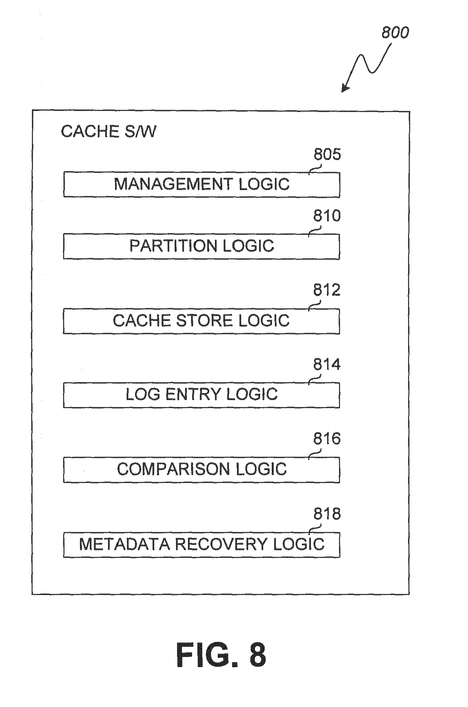

In addition to the application program 124, memory 120 further includes a file system 122 for managing data files and programs, a cache store mirror 600 and cache software 800. The architecture and use of the cache store mirror 600 will be described in detail in association with the description of the illustration in FIG. 6. Similarly, the architecture and operation of the cache software 800 will be described in detail in association with the description of the illustration in FIG. 8.

Flash-based cache device 130 is arranged to improve performance of applications such as APP 124 by strategically caching the most frequently accessed data in data store 140 in the cache store 300. Host system based software such as cache software 800 is designed to detect frequently accessed data items stored in data store 140 and store them in the cache store 300.

A cache controller (not shown) of the flash-based cache device 130 communicates with host system 100 and data store 140 via an interface, such as a bus. The flash-based cache device 130 can be physically embodied in an assembly that is pluggable into a motherboard or backplane (not shown) of host system 100 or in any other suitable structure. In a preferred embodiment, the flash-based cache device 130 is coupled to the host system 100 via a peripheral component interconnect express 2.0 (PCIe) interface bus depicted by the two way arrow.

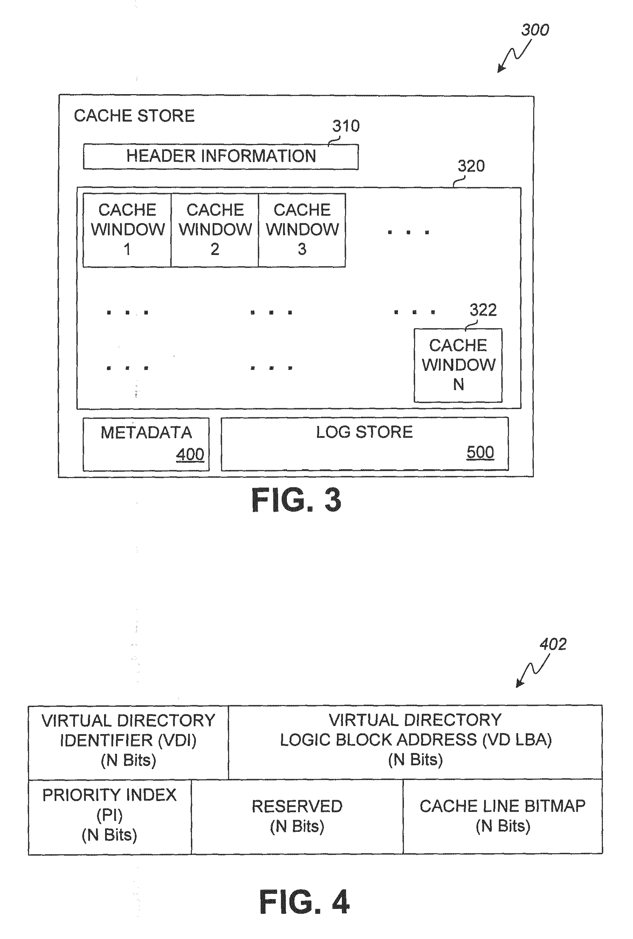

FIG. 3 is a schematic illustration of the cache store 300 of FIG. 2. Cache store 300 is partitioned or divided into at least four separate storages areas. A first portion or partition includes header information 310. A second portion includes a set of cache windows 320. A third portion includes a metadata store 400. A fourth portion includes a log store 500. Header information includes a flag or other indicator that indicates an operational status of the flash-based cache device 130 (FIG. 1), a next usable sequence number for use in navigating entries in the log store 500, information indicative of the location and the size of the metadata store 400, information indicative of the location and size of the log store 500, as well as information indicative of the number of cache windows 322 in the second portion. A significant amount of the storage capacity of the cache store 300 is allocated to the regions identified in the illustration as cache windows. Each cache window is further sub-divided into cache blocks of lines of a desired size.

An I/O operation that accesses a defined region of the data store 140 is allocated a virtual cache window. On repeated accesses of the defined region (and after a threshold is reached), the virtual cache window (VCW) is converted to a physical cache window. While the VCW is freed, the physical cache window (CW) (i.e., one of the cache windows 322) is filled with data from the defined region of the data store 140. After a successful completion of the write operation to the CW, subsequent read requests of the defined region will be processed by the flash-based cache device 130 rather than the data store 140.

When the flash-based cache device 130 is initially introduced to the host system 100, cache window objects are allocated in host memory 120 and added into a free cache window list (not shown). A sufficient number of VCW objects are also allocated and put into a free virtual cache window list. As I/O operations are received, a hash table is searched for a VCW or CW. If one is not found, a VCW is removed from the free list and used to track the region of the received I/O. This VCW is now inserted into the hash table. Upon receiving sufficient accesses on the VCW, a physical CW is taken from the free list. A cache window 322 is filled at the corresponding location in the set of cache windows 320 in the cache store 300. When the cache store 300 is initialized for the first time, the header information 310 will contain a next usable sequence number of 0 and all the entries in the log store 500 and metadata store 400 will be initialized to a desired binary value (i.e., a logic 0 or a logic 1).

FIG. 4 is a schematic illustration of an entry 402 in the metadata store 400 of FIG. 3. The metadata entry 402 includes a set of fields that hold information about the data stored in the cache store 300. Each entry 402 in the metadata store 400 represents a physical CW (i.e., a cache window 322 stored in the set of cache windows 320. The size of the metadata store 400 is dependent on the number of CWs 322 allocated. Each metadata entry 402 in the metadata store 400 maps or identifies a specific CW 322 in the cache store 300. Each metadata entry 402 includes a virtual directory identifier (VDI), a virtual directory logic block address (VD LBA), a priority index (PI), and a cache line bitmap for the range or block of data that has been transferred to the cache store 300. Each metadata entry 400 further includes a reserved store for storing "dirty" bits. Dirty bits record changes to the data in the cache store that have not been transferred back to the corresponding storage location I the data store 140.

In a preferred embodiment, the VDI includes 6 bits to identify up to 64 virtual disks that correspond to up to 64 data storage devices in the data store 140 in a 1:1 relationship. The VD LBA includes 26 bits to identify a range of data that is cached from a logical source address or reference location of 0 to a location up to 64TB removed from the reference. The PI includes 4 bits to identify 16 priority levels or queues in which the CWs are logically inserted. The cache line bitmap indicates which of the cache blocks are in use. Alternative arrangements (i.e., location and bit lengths) of the fields in the metadata entries 402 are contemplated.

The PI index, which represents a measure of how frequently the data is accessed by applications on host system 100, is dynamic with some CWs moving into the cache store 300 at first priority level or bucket and over time moving up or down priority levels. Cached CWs that are infrequently accessed are replaced as storage capacity is used by the cache controller. The priority index enables the cache controller to differentiate the data in the CWs based on the weight of cache hits within the region. After a sufficient number of hits within a specified time, a particular CW will be promoted to a higher priority value or index. If a particular CW has not received enough I/O operations over a period of time, the CW will be demoted to a lower priority level. When storage capacity is no longer available, a CW is reused or reallocated after removing the same from the lowest priority level.

In an example embodiment with a cache data store capacity of 1TB and a CW of 1MB, one million CWs are required. To represent one million CWs, a metadata store 400 requires 8MB of storage capacity. An additional 64MB of data capacity is allocated or partitioned to the log store 500. The log store 500 is available to record updates to metadata for any of the allocated CWs 322 when I/O operations are processed.

Multiple flash-based cache devices can be deployed by configuring and maintaining a metadata store 400 for each flash-based cache device 130. When multiple flash-based cache devices 130 are so deployed, the cache software 800 will associate and track the devices with a specified group identifier.

FIG. 5 is a schematic illustration of an entry 502 in the log store 500 of FIG. 3. The log entry 502 includes the same set of fields that are provided in a metadata entry 402. In addition to that information, the log entries 502 further include a checkpoint or sequence number that identifies a position in the log store that is available for an entry and a CW index that represents the individual CWs 322 in the cache store 300.

Each time a cacheable region becomes "hot" (is identified as being frequently accessed by an application or applications executing on host system 100, the VCW is converted into physical CW. Upon every I/O access of the CW 322, if the cache line is not filled, a desired range of data (e.g., 64KB) is fetched from the data store 140 and filled into the corresponding space in the cache store 300. At the same time, appropriate bits are enabled in the cache line bitmap in the within the CW 322. Special care is taken care when I/O operations overlap cache lines and or CWs 322.

Whenever a CW is utilized from the free pool, the cache line bitmap has changes and CW promotion/demotion within priority buckets occur. Accordingly, corresponding information is updated in the cache store mirror 600 (a representation of the metadata store and cache window objects) maintained in memory 120 associated with host system 100. A metadata entry location is chosen within the metadata store based on the cache device's CW location. Subsequently, a log entry is generated and recorded in the log store 500 of the cache store 300. Host system I/O is completed upon completion of all metadata transactions.

Once all the log entries are filled in the storage allocated for the log store 500 (e.g., 64MB), the host memory representation of the metadata block or metadata mirror is written to the cache store 300 of the flash-based cache device 130. After a successful update of the metadata store 400, the header information 310 of the cache store 300 is updated with the next usable log sequence number.

The log entry arrangement illustrated in FIG. 5 is capable of representing up to one million CWs to provide a 1TB cache memory capacity when the CW index is allocated 20 bits. The sequence number will have values that can wrap around the log store 500. Alternative arrangements (i.e., location and bit lengths) of the fields in the log entries 502 are contemplated.

FIG. 6 is a schematic illustration of the host memory representation or cache store mirror 600 of FIG. 2. As indicated in FIG. 6, the cache software 800 maintains a cache store mirror 600 in host system memory 120. The cache store mirror includes a copy of the metadata store from the cache store 300 on the flash-based cache device 130 and retains cache window objects from CWs designated for transfer to the cache store 300. As indicated above, only after the log store 500 in the cache store 300 has reached its storage capacity, is the information in the cache store mirror 600 used to update the information in the cache store 300.

FIG. 7 is a schematic illustration showing use of the log store 500 of FIG. 3 over time. As indicated in FIG. 7, as log entries 712 are recorded in the log store 500 they are added in a sequential manner starting with an initial checkpoint or sequence number indicated schematically by the arrow 710. As indicated above, the initial sequence number is defined in the header information 310 of the cache store 300.

FIG. 8 is a schematic illustration of the cache software 800 of FIG. 2. In the illustrated embodiment various logic elements or modules are shown separate from one another as individual components of cache software 800. In this regard, the cache software 800 includes management logic 805, partition logic 810, cache store logic 812, log entry logic 814, comparison logic 816, and metadata recovery logic 818. Management logic 805 includes executable instructions that when executed by a processor coordinate data operations within the host system 100 including I/O operations to and from the data store 140 and to and from the flash-based cache device 130. In operation, the management logic 805 enables a data storage manager that identifies data in the data store 140 that should be cached in the flash-based cache device 130.

Partition logic 810 includes executable instructions that when executed by a processor coordinate the relative placement and size of header information 310, a CW store 320, a metadata store 400 and a log store 500 within the cache store 300 of the flash-based cache device 130. Partition logic 810 may include rules and algorithms for calculating optimum sizes and placement for metadata store 400 and log store 500 in accordance with one or more input parameters identifying characteristics of the data store 140 and the flash-based cache device 130.

Cache store logic 812 includes executable instructions that when executed by a processor coordinate I/O operations both to and from the flash-based cache device 130. As described above, the cache store logic 812 manages VCWs, CWs, VCW free lists, has tables and priority lists or buckets. The cache store logic 812 may be integrated with a module that monitors I/O operations between host system 100 and data store 140 to identify data items stored therein that should be transferred to the flash-based cache device 130. Alternatively, the cache store logic 812 may receive inputs from a separate application executing on the host system 100 and configured to identify such "hot" data. In addition, cache store logic 812 directs the transfer of appropriately arranged information in the form of entries 402 to metadata store 400.

Log entry logic 814 includes executable instructions that when executed by a processor determine what information is to be transferred into an appropriately arranged log entry 502 in the log store 500, as illustrated and described above in association with the embodiment illustrated in FIG. 5. As also indicated above, the log entry logic 814 will retrieve an initial index or sequence number, sequentially enter each of the log entries, with each log entry mapped in a 1:1 relationship with a CW 322 in the cache store 300 and to a data item located in the data store 140 via the information fields in common with those in entries of the metadata store 400.

Comparison logic 816 includes executable instructions that when executed by a processor determine valid log entries in the log store 500. In this regard, the sequence number of each entry is compared to the next entry. Unique incrementing sequence numbers are employed. Consequently, as long as a difference of the sequence numbers is a 0 or a 1, then the log entry is valid (and applied to the metadata 400). When the difference is a non 0 or 1, the comparison logic 816 indicates that the process has reached an invalid log entry and further processing of the log is terminated. As indicated above, the header information 310 provides the first sequence number to be used in the comparisons.

During an initialization process, a random sequence number is selected. The random sequence number is recorded in the header information on the cache store. The first log entry will use the sequence number stored in the header information. For subsequent log entries the sequence number is incremented by one. As also indicated above, the sequence numbers are arranged in such a way that processing will wrap from an end of the log store 500 back to the beginning of the log store 500. When the log is full, as determined by a difference value that is not a 0 or a 1, the metadata in volatile memory is written to the cache store and the sequence number is incremented by one and stored in the header information. The next update to log will be at the log location identified by the sequence number.

Metadata recovery logic 818 includes executable instructions that when executed by a processor perform a series of activities to rebuild the cache mirror 600 from the contents of the metadata store 400 and the valid entries in the log store 500. First the header information 310 in the cache store 300 is read to understand the layout of the cache store 300 and to retrieve the next usable sequence number. The contents of the metadata store 400 are copied to the cache mirror 600 in the memory 120 of the host system 100. The first log entry is checked against the next usable sequence number recovered from the header information 310. If the sequence number matches, the log entry is valid and the data associated with the log entry should be recovered. Thereafter, the sequence number is incremented and checked for a valid log entry. Valid log entries are applied on top of the cache mirror 600. When the sequence number does not match, the latest metadata is stored in the cache store and processing of the log is terminated. The metadata in the cache mirror 600 is traversed and appropriate CWs are updated. The recovered metadata is written to the cache store and the next usable sequence number is stored in the header information 310. These CWs are removed from a free list and inserted into hash tables and a priority list at an appropriate priority index or value. In addition, the CWs hit count is initialized as a function of the priority index or bucket and a promotion threshold to ensure CWs are identified in the appropriate relative "hotness" range. Thereafter, host I/O operations are allowed. The next log entry will be stored in the log store in accordance with the sequence number stored in the header information 310.

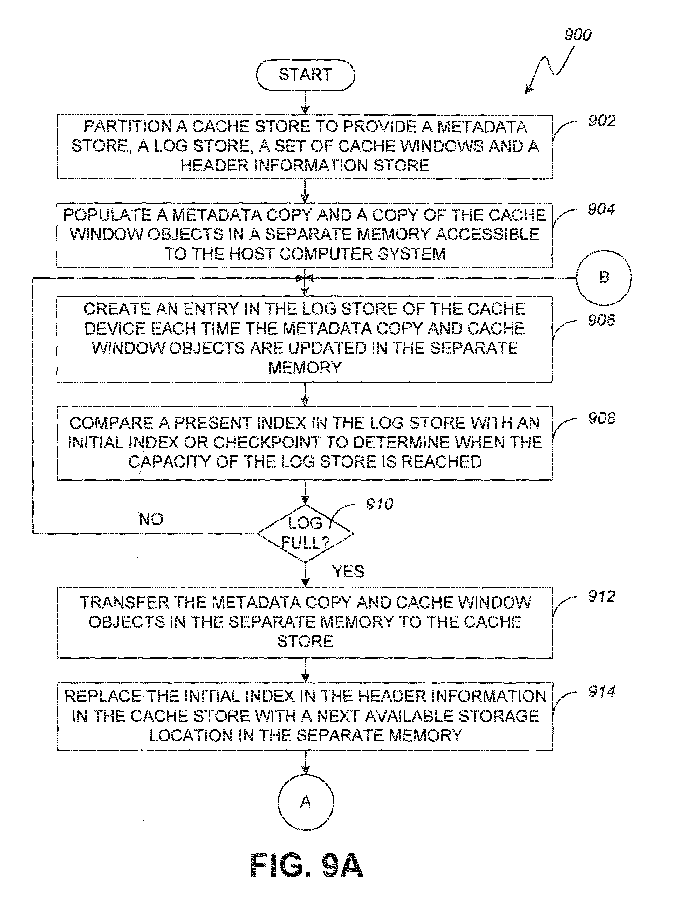

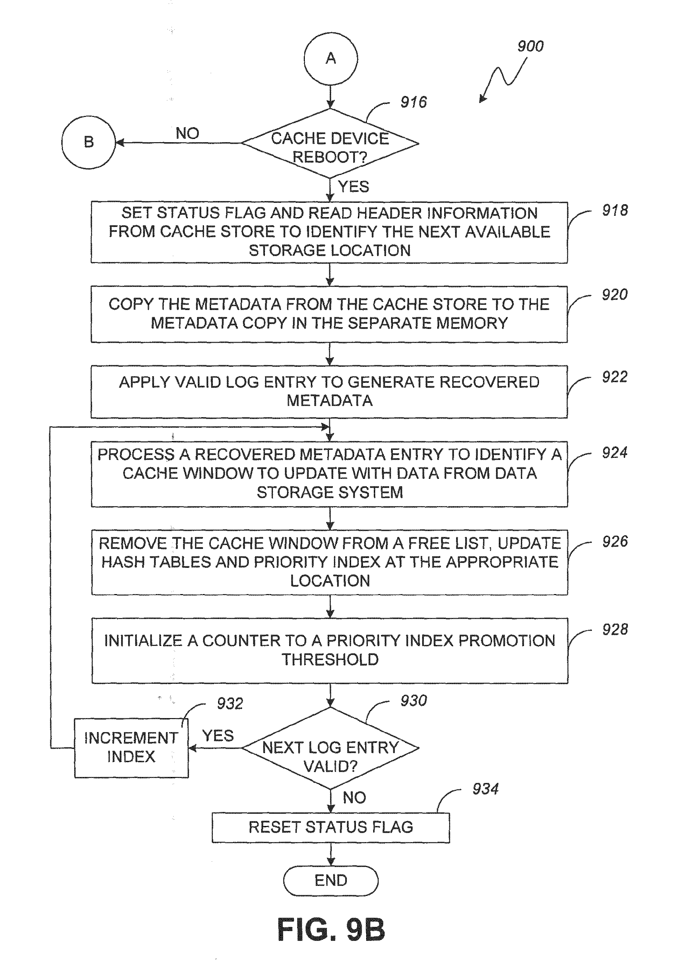

FIGs. 9A and 9B include a flow diagram illustrating a method 900 for managing a cache store to achieve improved ramp-up across reboots of a cache device. Ramp-up is the time it takes the cache controller to recover from a reboot operation. By recover, it is meant that the cache store 300 is restored to a valid state including all the "hotness" and priority queue characteristics. Stated another way, cache history is restored without loss.

It should be understood that method 900 includes steps that include preliminary steps for establishing a system that is capable of maintain metadata across a reboot operation, as well as, steps that are performed upon detecting a system recovery from the reboot. Method 900 begins with block 902 where a cache store is portioned to support a metadata store, a log store, a set of CWs and a header information store. In block 904, a metadata copy and a copy of CW objects are populated in a separate memory accessible the host system. In block 906, an entry is created in log store of the cache device each time the metadata copy and the CW objects are updated in the copy stored in the separate memory. In block 908, a present index or sequence number in the log store is compared with an initial index or checkpoint to determine when the capacity of the log store has been reached. In decision block 910, a determination is made as to whether the log is full. When the log is not at capacity, as indicated by the flow control arrow labeled "NO" exiting the decision block 910, processing returns to block 906. Otherwise, processing continues with block 912, where the metadata copy and CW objects in the separate memory are transferred to the cache store. Thereafter, as indicated in block 914, the initial index or sequence number in the header information is replaced with a next available storage location in the separate memory.

As indicated by connector A, the method 900 continues with decision block 916, where it is determined whether the cache device has recovered from a reboot operation. If not, processing continues with block 906, as indicated by connector B. Otherwise, the system has rebooted and processing continues with block 918, where a status flag is set to suspend host I/O operations from the cache device 130 and header information is read from the cache store to identify the next available storage location in the log. In block 920, the contents of the metadata stored in the cache are copied to the metadata mirror in the separate memory accessible to the host system. In block 922, valid log entries are applied on top of the metadata. In block 924, recovered metadata is processed to identify a CW that needs to be updated with information from the data storage system. In block 926, the CW is removed from a free list and updated in hash tables and inserted in an appropriate location in accordance with a priority index. In block 928, a counter is initialized in accordance with a priority index promotion threshold. Thereafter, as indicated in decision block 932, a determination is made as to whether the next log entry is valid. If so, the index is incremented with a unique sequence number as indicated in block 932 and processing returns to block 924. Otherwise, all log entries have been processed and a status flag is reset in block 934 to indicate that I/O operations are enabled.

As a result, if the cache is full and a new data element is identified as belonging in the cache, the cache controller will identify as an appropriate candidate for CW replacement, a CW that has received relatively low I/O requests in the period of time just before the reboot. In this way, the improved cache controller reuses CWs receiving relatively low I/O requests instead of discarding relatively "hotter" data regions from the cache store.

To reduce the frequency of log updates when CWs are frequently promoted or demoted, the granularity of the updates in the log entry can be modified. For example, when a CW gets promoted or demoted across more than 25% of the priority levels, irrespective of how many levels, only one log entry is recorded.

It should be understood that the flow diagrams of FIGs. 9A and 9B are intended only to be exemplary or illustrative of the logic underlying the described method. Persons skilled in the art will understand that in various embodiments, data processing systems including cache processing systems or cache controllers can be programmed or configured in any of various ways to effect the described methods. The steps or acts described above can occur in any suitable order or sequence, including in parallel or asynchronously with each other. Steps or acts described above with regard to FIGs. 9A and 9B can be combined with others or omitted in some embodiments. Although depicted for purposes of clarity in the form of a flow diagram in FIGs. 9A and 9B, the underlying logic can be modularized or otherwise arranged in any suitable manner. Persons skilled in the art will readily be capable of programming or configuring suitable software or suitable logic, such as in the form of an application-specific integrated circuit (ASIC) or similar device or combination of devices, to effect the above-described methods. Also, it should be understood that the combination of software instructions or similar logic and the local memory 120 or other memory in which such software instructions or similar logic is stored or embodied for execution by processor 110, comprises a "computer-readable medium" or "computer program product" as that term is used in the patent lexicon.

It should be noted that the invention has been described with reference to one or more exemplary embodiments for the purpose of demonstrating the principles and concepts of the invention. The invention is not limited to these embodiments. As will be understood by persons skilled in the art, in view of the description provided herein, many variations may be made to the embodiments described herein and all such variations are within the scope of the invention as defined in the claims.

## Claims

1. A method for managing a cache store associated with a host computer system and a data storage system that maintains information in the cache store across a reboot of a cache host controller, the method comprising:
partitioning the cache store to provide a first portion for storing metadata, a second portion for storing data values identified by a data storage manager as data that belongs in the cache store, a third portion for storing changes to the metadata, and a fourth portion containing information about the host and the cache store;
populating a representation of the first portion with metadata and a representation of the second portion with data values as directed by the data storage manager, the data storage manager identifying data items to be stored in the cache store in accordance with a frequency value representing requests over a desired time for specific data items stored in the data storage system;
creating an entry in the third portion of the cache store each time the representation of the first portion is populated with metadata and the representation of the second portion is populated with data values, as directed by the data storage manager, wherein the representations of the first portion and second portion are stored in a volatile memory accessible via one or more of the host computer system, the data storage manager, and the cache host controller;
comparing a present index in the third portion of the cache store with an initial index to determine when a data storage capacity of the third portion has been reached, when the data storage capacity of the third portion has been reached;
writing the information in the representation of the first portion to the corresponding first store of the cache store; and
replacing the initial index with a next available storage location in the third portion of the cache store.

2. The method of claim 1, further comprising:
initializing the representation of the first portion, the representation of the second portion and the representation of the third portion to a desired binary value.

3. The method of claim 1, wherein the fourth portion contains an indication of the state of the host, a first identifier and a first range defining a location and a size of the first portion, a second identifier and a third identifier identifying a number of cache storage units and a size of each cache line within a cache storage unit in the second portion and a fourth identifier and a fourth range defining a respective location and a size of the third portion.

4. The method of claim 1, wherein the first portion comprises a first entry, the first entry including a virtual directory identifier, a logical block address, a priority index, a reserved area, and a cache line bitmap.

5. The method of claim 1, wherein the third portion comprises a sequence number, a cache line bitmap, a virtual directory identifier, a logical block address, a priority index, a reserved area, and a cache window index.

6. The method of claim 1, further comprising:
upon a reboot of the cache host controller, reading the contents of the fourth portion to identify a next usable sequence number;
copying the first portion of the cache memory device into the volatile memory accessible by the data storage manager and a cache store;
applying valid log entries on top of the one or more entries in the first portion of the volatile memory accessible by the data storage manager and the cache store to generate recovered metadata;
traversing the recovered metadata to identify appropriate cache windows to update with corresponding data from the data storage system;
modifying a status of the appropriate cache windows;
inserting the cache windows into hash tables and the priority index; and
sending an indication to the cache host controller once all metadata entries are traversed.

7. The method of claim 6, wherein to determine valid log entries comprises a comparison of a sequence number in a first entry to the sequence number in a subsequent entry.

8. The method of claim 7, wherein the comparison comprises:
calculating a difference of a sequence number in the first entry with the sequence number in the next entry;
determining if the difference is a 0 or a 1; and
when the difference is not a 0 or a 1, terminating the traversing of the recovered metadata.

9. A cache controller, comprising:
an interface for communicating data with a host computer system and with a data storage system;
a cache store; and
a processing system responsive to header information stored in the cache store, the processing system configured to:
respond in a programmable way to a state identifier responsive to a present state of the cache controller;
identify a next usable sequence number for a metadata log;
identify a location and size of a metadata store within the cache store;
identify a location and size of a metadata log within the cache store;
identify a location and size of a plurality of cache windows within the cache store, each cache window including a plurality of cache lines further identified by the cache controller;
write information stored in a representation of the metadata and accessible via the host computer system to the cache store; and
replace the next usable sequence number in the metadata log.

10. The cache controller of claim 9, wherein the processing system is further configured to:
maintain the metadata, cache window objects, and the metadata log in the cache store.

11. The cache controller of claim 10, wherein the metadata comprises at least one entry, the entry including a virtual directory identifier, a logical block address, a priority index, a reserved area, and a cache line bitmap.

12. The cache controller of claim 11, wherein the metadata log comprises the sequence number, the cache line bitmap, the virtual directory identifier, the logical block address, the priority index, the reserved area information, and the cache window index.

13. The cache controller of claim 9, wherein the processing system is further configured to:
upon completion of a reboot of the cache controller;
read the contents of a representation of the cache store, the contents stored in a volatile memory accessible to the host computer system and further containing the next usable sequence number;
copy the contents of the metadata store to the volatile memory accessible to the host computer system;
apply valid log entries on top of one or more entries in the metadata store to generate recovered metadata;
traverse the recovered metadata to identify appropriate cache windows to update with corresponding data from the data storage system;
modify a status of the appropriate cache windows;
insert the cache windows into hash tables and the priority index; and
update a flag indicating to a data storage system that input-output operations to the cache memory are enabled.

14. The cache controller of claim 13, wherein valid log entries are identified by a comparison of a sequence number in a first entry to the sequence number in a subsequent entry, wherein the comparison comprises:
calculating a difference of a sequence number in the first entry with the sequence number in the next entry; and
determining if the difference is a 0 or a 1.

15. A computer-readable medium having stored thereon in computer executable non-transitory form instructions that, when executed on a processing system of a cache controller, direct the processing system to operate in accordance with the method of any one of claims 1 to 8.
